# EUROPÄISCHE PATENTANMELDUNG

(11) **EP 4 850 569 A1**
(43) Veröffentlichungstag der Anmeldung: **09.12.2026**
(21) Anmeldenummer: 26168559.8
(22) Anmeldetag: 27.03.2026
(51) Int. Cl.: A47B 47/04, F16B 12/34, A47B 47/05

(54) **STECKREGAL-VERBINDUNGSEINHEIT**

(30) Priorität: 06.06.2025 DE 202025103195 U; 12.09.2025 DE 202025105438 U
(71) Anmelder: Qingdao Qingtai Metal Products Co., LTD, Qingdao 266400 (CN)
(72) Erfinder: Song, Zhiyong, Qingdao, 266400 (CN)
(74) Vertreter: Weickmann & Weickmann PartmbB

(57) **Zusammenfassung**

Die Erfindung betrifft eine Steckregal-Verbindungseinheit (10) zum Verbinden einzelner Säulensegmente (50; 50a, 50b) eines Steckregals (100), wobei die Steckregal-Verbindungseinheit (10) einen ersten länglichen Abschnitt (12) und einen zweiten länglichen Abschnitt (14) umfasst, wobei sich der erste längliche Abschnitt (12) und der zweite längliche Abschnitt (14) parallel entlang einer Haupterstreckungsrichtung (X-X) der Steckregal-Verbindungseinheit (10) erstrecken, wobei jeder längliche Abschnitt (12, 14) eine erste Fläche (16a, 18a) und eine zweite Fläche (16b, 18b) entgegengesetzt zu der ersten Fläche (16a, 18a) umfasst, wobei wenigstens ein Verbindungselement (20) an der ersten Fläche (16a) des ersten länglichen Abschnitts (12) und/oder an der ersten Fläche (18a) des zweiten länglichen Abschnitts (14) bereitgestellt ist. Ferner betrifft die Erfindung ein Steckregal (100).

## Beschreibung

Die vorliegende Erfindung betrifft eine Steckregal-Verbindungseinheit zum Verbinden einzelner Säulensegmente eines Steckregals und ein Steckregal.

Steckregale werden häufig zum Lagern von Waren verwendet, insbesondere in Lagerhallen. Diese Regale sind für die Lagerung von Waren vorteilhaft, da sie leicht zu montieren, relativ billig und langlebig sind. Ferner sind die darin gelagerten Waren leicht zugänglich, was von Vorteil ist, wenn die Waren häufig aus dem Regal entnommen werden müssen, um sie zu verwenden oder neu zu verteilen. Steckregale umfassen in der Regel vier vertikal angeordnete Säulen aus Metall und eine Mehrzahl horizontal angeordneter Regalböden, auf denen die Waren gelagert werden. Optional können die Regalböden mit Platten aus Holz oder Metall ergänzt werden, um eine durchgehende Fläche für die Lagerung bereitzustellen.

Im Gegensatz zu herkömmlichen Holzregalen wird die Montage von Steckregalen dadurch erleichtert, dass jede der Säulen eine Mehrzahl von Öffnungen umfasst, in die ein üblicherweise als Nietkopf gebildeter Vorsprung eingeführt wird. Ein oder mehrere Vorsprünge sind an den Regalböden oder an horizontalen Trägern befestigt, die in Kombination mit den Regalböden verwendet werden können. Daher benötigen Steckregale für deren Montage oft keine Bolzen, Schrauben oder andere Stützkonstruktionen.

Die Höhe eines Steckregals ist jedoch auf die Höhe der Säulen beschränkt, die der Lieferant des Steckregals bereitstellt. Da in gewöhnlichen Lagern häufig große Mengen unterschiedlichster Waren aller Größen und Volumina verwendet werden, kann es erforderlich sein, die Höhe eines Steckregals anzupassen, um die Lagerkapazität des Steckregals zu erhöhen und gleichzeitig eine hohe Regalstabilität zu gewährleisten. Da die Steckregal-Säulensegmente in der Regel nicht mit Mitteln bereitgestellt werden, die ein vertikales Stapeln oder Verbinden von zwei oder mehr Säulensegmenten ermöglichen, besteht ein Bedarf an solchen Verbindungsmitteln, um zwei oder mehr Säulensegmente zu verbinden, die dann eine einzige Säule bilden.

Es ist daher die Aufgabe der vorliegenden Erfindung, eine Steckregal-Verbindungseinheit zum Verbinden einzelner Säulensegmente eines Steckregals bereitzustellen, wobei die Steckregal-Verbindungseinheit es ermöglicht, zwei einzelne Säulensegmente flexibel miteinander zu verbinden, um die Höhe eines Steckregals und die Positionierung von Regalböden anzupassen.

Gemäß einem ersten Aspekt der vorliegenden Erfindung wird die obige Aufgabe durch eine Steckregal-Verbindungseinheit zum Verbinden einzelner Säulensegmente eines Steckregals gelöst, wobei die Steckregal-Verbindungseinheit einen ersten länglichen Abschnitt und einen zweiten länglichen Abschnitt umfasst, wobei sich der erste längliche Abschnitt und der zweite längliche Abschnitt parallel entlang einer Haupterstreckungsrichtung der Steckregal-Verbindungseinheit erstrecken, wobei jeder längliche Abschnitt eine erste Fläche und eine zweite Fläche entgegengesetzt zu der ersten Fläche umfasst, wobei wenigstens ein Verbindungselement auf der ersten Fläche des ersten länglichen Abschnitts und/oder auf der ersten Fläche des zweiten länglichen Abschnitts bereitgestellt ist, und wobei das Verbindungselement so ausgebildet ist, dass es von der ersten Fläche hervorsteht und dazu eingerichtet ist, in einen entsprechenden ersten Aufnahmeabschnitt einer Öffnung eines Säulensegments eines Steckregals eingeführt zu werden und, nachdem es in den ersten Aufnahmeabschnitt eingeführt worden ist, in einen zweiten Aufnahmeabschnitt der Öffnung verlagert zu werden, um einen Eingriff mit dem Säulensegment zu bilden.

Gemäß einem wichtigen Merkmal des ersten Aspekts der vorliegenden Erfindung steht das Verbindungselement von der ersten Fläche hervor. Es kann somit in die Öffnung eines Säulensegments eingeführt werden, ähnlich wie der Vorsprung oder der Nietkopf, wie zuvor in Bezug auf die Befestigung eines Regalbodens an ein Säulensegment beschrieben wurde. Nach dem Einführen des Verbindungselements in den ersten Aufnahmeabschnitt der Öffnung des Säulensegments kann das Verbindungselement in den zweiten Aufnahmeabschnitt der entsprechenden, d.h. komplementär geformten, Öffnung verlagert werden, indem entweder die Steckregal-Verbindungseinheit relativ zum Säulensegment verschoben wird oder das Säulensegment relativ zur Steckregal-Verbindungseinheit verschoben wird. Die Verschiebung kann insbesondere entlang der Haupterstreckungsrichtung der Steckregal-Verbindungseinheit oder des Säulensegments erfolgen. In diesem Fall können die beiden Haupterstreckungsrichtungen parallel zueinander verlaufen. Im montierten Zustand kann sich die Steckregal-Verbindungseinheit wenigstens mit dem verbundenen Säulensegment überlappen.

Die Steckregal-Verbindungseinheit, die aus Metall bestehen kann, kann dazu verwendet werden, zwei einzelne Säulensegmente miteinander zu verbinden, um so die Höhe eines Steckregals um die Länge des hinzugefügten Säulensegments zu vergrößern. Im Allgemeinen können zur ordnungsgemäßen Montage eines Steckregals eine oder mehrere Steckregal-Verbindungseinheiten an jeder der vier Säulen verwendet werden, die zur Montage eines Steckregals eingesetzt werden.

Vorteilhafterweise ermöglicht die Steckregal-Verbindungseinheit eine schraubenlose und manuelle Verbindung von zwei einzelnen Säulensegmenten. Ferner sind keine weiteren Werkzeuge erforderlich, um die Steckregal-Verbindungseinheit an einem Säulensegment zu befestigen. So kann die Höhe eines Steckregals durch Verwendung der beschriebenen Steckregal-Verbindungseinheit einfach angepasst werden.

Gemäß einem bevorzugten Ausführungsbeispiel der vorliegenden Erfindung können sowohl der erste längliche Abschnitt als auch der zweite längliche Abschnitt wenigstens ein Verbindungselement umfassen, wobei die Anzahl der auf der ersten Fläche des ersten länglichen Abschnitts und des zweiten länglichen Abschnitts gebildeten Verbindungselemente identisch sein kann. Insbesondere kann die Anordnung der Verbindungselemente, die auf dem ersten länglichen Abschnitt und dem zweiten länglichen Abschnitt gebildet sind, identisch sein. Da die Säulensegmente von Steckregalen im Allgemeinen eine Mehrzahl von Öffnungen umfassen, die entlang der jeweiligen Haupterstreckungsrichtung eines Säulensegments ausgerichtet sind, kann die Stabilität der Verbindung zwischen zwei verbundenen Säulensegmenten dadurch erhöht werden, dass sowohl an dem ersten als auch dem zweiten länglichen Abschnitt wenigstens ein Verbindungselement bereitgestellt wird.

Gemäß einem optionalen Ausführungsbeispiel der vorliegenden Erfindung kann das Verbindungselement einstückig mit dem ersten länglichen Abschnitt oder dem zweiten länglichen Abschnitt gebildet sein. Insbesondere kann das Verbindungselement durch Stanzen auf der zweiten Fläche des jeweiligen länglichen Abschnitts gebildet werden, so dass das Verbindungselement als Vorsprung auf der ersten Fläche des jeweiligen länglichen Abschnitts ausgebildet ist. Ferner ist es nicht erforderlich, weitere Strukturen, z. B. zusätzliche Nietköpfe, an der ersten Fläche eines länglichen Abschnitts anzubringen. Dies erleichtert die Herstellung der Steckregal-Verbindungseinheit und reduziert die Produktionskosten.

Alternativ kann das Verbindungselement über eine Nietverbindung an dem ersten länglichen oder dem zweiten länglichen Abschnitt befestigt sein. In diesem Fall kann das Verbindungselement in ein dafür vorgesehenes Loch in den ersten bzw. den zweiten länglichen Abschnitt eingesetzt werden und anschließend mittels gängiger Nietverfahren eine Nietverbindung zwischen dem entsprechenden Abschnitt und dem Verbindungselement erzeugt werden. Optional kann dabei auf der zweiten Fläche des entsprechenden länglichen Abschnitts ein, insbesondere ringförmiger, Nietfuß gebildet werden, der ein unerwünschtes Verlagern des Verbindungselements verhindert.

Gemäß einem weiteren Ausführungsbeispiel der vorliegenden Erfindung kann das Verbindungselement eine erste Aussparung und eine zweite Aussparung umfassen, wobei die zweite Aussparung in Bezug auf das Verbindungselement entgegengesetzt zu der ersten Aussparung angeordnet ist, und wobei die erste Aussparung und die zweite Aussparung jeweils so eingerichtet sein können, dass sie zumindest teilweise in den zweiten Aufnahmeabschnitt der Öffnung eines Säulensegments eines Steckregals eingreifen. Die erste und die zweite Aussparung können insbesondere das Einschieben des Verbindungselements in den zweiten Aufnahmeabschnitt einer Öffnung erleichtern, da durch das Ausbilden der beiden Aussparungen ein Spalt zwischen einer oberen Fläche des Verbindungselements und seiner Basis an der ersten Fläche jedes länglichen Abschnitts entsteht. Die erste und die zweite Aussparung können z. B. durch Laserschneiden erzeugt werden und sichelförmig ausgebildet sein.

Ferner können der erste längliche Abschnitt und der zweite längliche Abschnitt relativ zur Haupterstreckungsrichtung der Steckregal-Verbindungseinheit in einem Winkel von 30° bis 150°, vorzugsweise von 60° bis 120°, besonders bevorzugt von 90°, angeordnet sein bzw. einen entsprechenden Winkel zueinander aufspannen. Diese abgewinkelte Anordnung des ersten und zweiten länglichen Abschnitts ist insbesondere deshalb bevorzugt, weil die Säulensegmente eines Steckregals üblicherweise zwei längliche Abschnitte umfassen, die ebenfalls einen Winkel zueinander aufspannen, wobei dieser Winkel 90° betragen kann. Die abgewinkelte Konfiguration der Steckregal-Verbindungseinheit zielt somit auf die Konfiguration der Säulensegmente ab, die mit der Steckregal-Verbindungseinheit verbunden werden sollen.

Wahlweise können der erste längliche Abschnitt und der zweite längliche Abschnitt jeweils drei oder vier Verbindungselemente umfassen. Während die Anzahl der Verbindungselemente im Allgemeinen variiert werden kann, hat sich gezeigt, dass die Anordnung von drei oder vier Verbindungselementen beim Verbinden zweier Säulensegmente eine ausreichend hohe Regalstabilität erzeugt.

Im Fall von drei Verbindungselementen können der erste längliche Abschnitt und der zweite längliche Abschnitt jeweils eine Länge von 90 bis 100 mm und eine Breite von 30 bis 40 mm aufweisen. Insbesondere kann die Länge jedes länglichen Abschnitts vorzugsweise etwa 92 mm und die Breite vorzugsweise etwa 32 mm betragen.

Umfassen der erste und der zweite längliche Abschnitt dagegen jeweils vier Verbindungselemente, können der erste längliche Abschnitt und der zweite längliche Abschnitt jeweils eine Länge von 130 bis 140 mm und eine Breite von 30 bis 40 mm aufweisen. In diesem Fall kann die Länge jedes länglichen Abschnitts vorzugsweise etwa 132 mm betragen und die Breite kann vorzugsweise etwa 32 mm betragen. Es hat sich herausgestellt, dass diese Abmessungen ausreichend Platz bieten, um die angegebene Anzahl von Verbindungselementen auf jedem länglichen Abschnitt anzuordnen und gleichzeitig genügend Spielraum zu lassen, um die Verbindungselemente in einen ersten Aufnahmeabschnitt einer entsprechenden Öffnung einzuführen und sie dann in einen zweiten Aufnahmeabschnitt der Öffnung zu schieben.

Ferner kann gemäß einem weiteren Ausführungsbeispiel der vorliegenden Erfindung ein Abstand zwischen einem Mittelpunkt zweier benachbarter Verbindungselemente jedes der ersten und zweiten länglichen Abschnitte zwischen 20 und 50 mm, vorzugsweise zwischen etwa 30 und 40 mm betragen. Dieser Abstand zwischen zwei benachbarten Verbindungselementen ermöglicht die Ausrichtung der Verbindungselemente der Steckregal-Verbindungseinheit an die Anordnung der Öffnungen eines Säulensegments. Wenn z. B. zwei benachbarte Öffnungen einen Abstand von 30 mm aufweisen, können auch zwei benachbarte Verbindungselemente einen Abstand von 30 mm aufweisen.

Gemäß einem bevorzugten Ausführungsbeispiel der vorliegenden Erfindung kann der erste längliche Abschnitt und/oder der zweite längliche Abschnitt wenigstens ein Loch umfassen. Das Loch kann bereitgestellt sein, wenn eine zusätzliche Verwendung von Bolzen oder Schrauben bevorzugt wird, insbesondere um die Stabilität des Steckregals zu erhöhen, oder um zusätzliche Befestigungsmittel an einer Säule eines Steckregals anzubringen. Da sich die Steckregal-Verbindungseinheit und das damit verbundene Säulensegment zumindest teilweise überlappen können, kann das Loch durch das Säulensegment verdeckt sein. In diesem Fall kann es erforderlich sein, ein Loch in das Säulensegment zu bohren, wobei das Loch des Säulensegments und das Loch des Verbindungselements im befestigten Zustand aligniert sind.

Entlang der Haupterstreckungsrichtung des ersten und des zweiten länglichen Abschnitts kann ein Loch mit den Verbindungselementen an jedem der länglichen Abschnitte aligniert sein, d. h. das Loch und die Verbindungselemente bilden eine Linie entlang der Haupterstreckungsrichtung des ersten und zweiten länglichen Abschnitts.

Im Fall länglicher Abschnitte, die vier oder mehr Verbindungselemente umfassen, können an jedem länglichen Abschnitt zwei Löcher ausgebildet sein, wobei der Abstand zwischen den Mittelpunkten der einzelnen Löcher 60 bis 80 mm, vorzugsweise etwa 70 mm, betragen kann. Außerdem kann der Abstand zwischen zwei benachbarten Verbindungselementen mit einem Loch dazwischen etwa 40 mm betragen. In jedem Fall kann der Durchmesser der Löcher 6 mm oder mehr betragen.

Ferner kann gemäß einem weiteren Ausführungsbeispiel der vorliegenden Erfindung eine obere Fläche des Verbindungselements relativ zu der ersten Fläche des ersten länglichen Abschnitts oder des zweiten länglichen Abschnitts geneigt sein. Insbesondere kann die obere Fläche eines jeden Verbindungselements unter Bezugnahme auf dessen vorstehenden Teil hervorstehen. Die Neigung der genannten oberen Fläche kann so gebildet sein, dass der Spalt zwischen der oberen Fläche des Verbindungselements und seiner Basis an der ersten Fläche jedes länglichen Abschnitts vergrößert ist. Dadurch wird das Verlagern bzw. Verschieben des Verbindungselements aus dem ersten Aufnahmeabschnitt der Öffnungen des Säulensegments zunächst erleichtert. Anschließend nimmt eine Reibungskraft zwischen dem Verbindungselement und dem Säulensegment allmählich zu, wenn das Verbindungselement in Richtung des zweiten Aufnahmeabschnitts der Öffnung des Säulensegments verlagert wird, wobei die Zunahme der Reibungskraft auf der Neigung der oberen Fläche des Verbindungselements beruht. Demzufolge wird das Säulensegment zwischen der oberen Fläche des Verbindungselements und dem Boden des Verbindungselements eingeklemmt.

Alternativ kann sich die obere Fläche des Verbindungselements anstelle einer geneigten Ausbildung auch parallel zu der ersten Fläche des ersten oder des zweiten länglichen Abschnitts erstrecken. Mit anderen Worten, das Verbindungselement kann eine flache obere Fläche aufweisen. Ferner kann das Verbindungselement einen Kopfabschnitt aufweisen, der die flache obere Fläche umfasst. Der Kopfabschnitt kann in diesem Fall dazu eingerichtet sein, einen Eingriff mit einem Säulensegment eines Steckregals zu erzeugen, indem er in einen Aufnahmeabschnitt einer Öffnung des Säulensegments eingeführt wird.

Es ist zu beachten, dass - falls eine Steckregal-Verbindungseinheit mit einer Mehrzahl von Verbindungselementen bereitgestellt wird - die Ausrichtung der Neigung jedes Verbindungselements unterschiedlich sein kann und insbesondere zwischen einem Verbindungselement, das zum Eingriff mit einem ersten Säulensegment eingerichtet ist, und einem Verbindungselement, das zum Eingriff mit einem zweiten Säulensegment eingerichtet ist, entgegengesetzt sein kann.

Gemäß einem zweiten Aspekt der vorliegenden Erfindung wird die zuvor genannte Aufgabe durch ein Steckregal gelöst, das eine Mehrzahl von Säulensegmenten, wenigstens eine Steckregal-Verbindungseinheit gemäß dem ersten Aspekt, wobei die Steckregal-Verbindungseinheit zwei Säulensegmente verbindet, und wenigstens einen Regalboden umfasst, der zur Lagerung von Waren angeordnet ist.

Das Nietregal gemäß dem zweiten Aspekt kann eine oder mehrere Steckregal-Verbindungseinheiten gemäß dem ersten Aspekt umfassen, wobei diese Steckregal-Verbindungseinheiten auf die einzelnen Säulen des Nietregals verteilt sein können. Zur Montage des Regalbodens können zwei Säulensegmente mittels einer Steckregal-Verbindungseinheit verbunden werden, indem ein Verbindungselement der Steckregal-Verbindungseinheit zunächst in die oberste oder unterste Öffnung eines ersten Säulensegments eingeführt wird und anschließend ein zweites Säulensegment mit einem freien Verbindungselement der Steckregal-Verbindungseinheit verbunden wird. Beim Verbinden des zweiten Säulensegments kann das Säulensegment so angeordnet werden, dass seine Öffnungen, die einen ersten und einen zweiten Aufnahmeabschnitt umfassen, in Bezug auf das erste Säulensegment invers ausgerichtet sind. Mit anderen Worten, das zweite Säulensegment kann um 180° gedreht werden, bevor es mit der Steckregal-Verbindungseinheit verbunden wird. Im Allgemeinen kann die Verbindung zwischen der Steckregal-Verbindungseinheit und einem einzelnen Säulensegment wie oben in Bezug auf den ersten Aspekt beschrieben gebildet werden.

Es ist zu beachten, dass entsprechende Merkmale, Vorteile und Ausführungsbeispiele, die sich auf die Steckregal-Verbindungseinheit gemäß dem ersten Aspekt der vorliegenden Erfindung beziehen, auch für das Steckregal gemäß dem zweiten Aspekt der vorliegenden Erfindung gelten können und umgekehrt.

Gemäß einem bevorzugten Ausführungsbeispiel der vorliegenden Erfindung umfasst der wenigstens eine Regalboden wenigstens teilweise Holz vom Typ OSB (oriented strand board). Die Verwendung von OSB-Holz ist vorteilhaft, da es langlebig ist und hohen Belastungen standhalten kann. Alternativ kann der Regalboden auch mitteldichte Faserplatten (MDF) oder Metallplatten umfassen.

Zusätzliche Merkmale und Vorteile der vorliegenden Erfindung werden aus der folgenden Beschreibung von Ausführungsbeispielen deutlich, wenn sie zusammen mit den begleitenden Figuren betrachtet werden, die insbesondere zeigen:
- Fig. 1: eine perspektivische Ansicht eines herkömmlichen Steckregals;
- Figs. 2a-2d: Darstellungen eines ersten Ausführungsbeispiels einer Steckregal-Verbindungseinheit gemäß der vorliegenden Erfindung;
- Figs. 3a-3d: Darstellungen eines zweiten Ausführungsbeispiels einer Steckregal-Verbindungseinheit gemäß der vorliegenden Erfindung;
- Fig. 4: eine perspektivische Ansicht einer Steckregal-Verbindungseinheit gemäß dem ersten Ausführungsbeispiel, die mit einem ersten Säulensegment verbunden ist;
- Fig. 5: eine perspektivische Ansicht einer Steckregal-Verbindungseinheit gemäß dem ersten Ausführungsbeispiel, die mit einem ersten Säulensegment und einem zweiten Säulensegment verbunden ist; und
- Fig. 6a-6b: Darstellungen eines dritten Ausführungsbeispiels einer Steckregal-Verbindungseinheit gemäß der vorliegenden Erfindung.

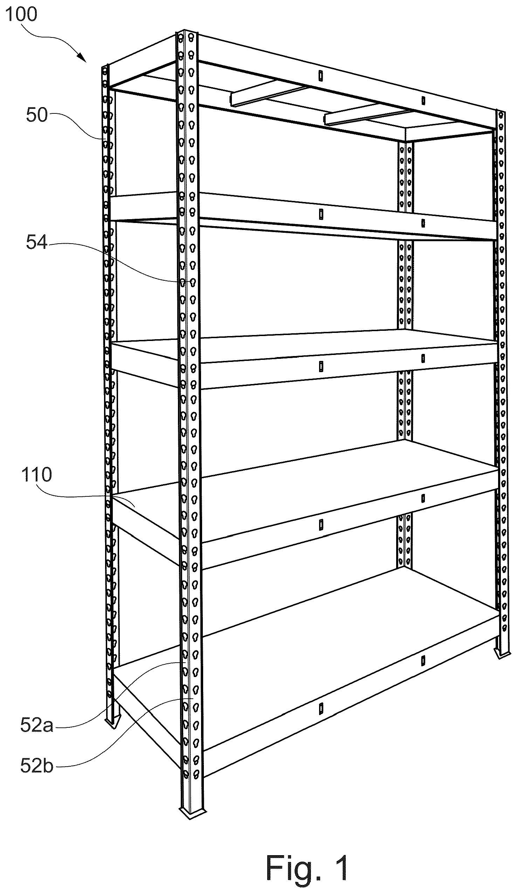

In Figur 1 ist eine perspektivische Ansicht eines herkömmlichen Steckregals 100 zur Lagerung von Waren (nicht gezeigt) veranschaulicht. Das Steckregal 100 umfasst vier vertikal angeordnete Säulen 50 und eine Mehrzahl horizontal angeordneter Regalböden 110. Die Waren können auf jedem der Regalböden 110 gelagert werden und sind dadurch leicht zugänglich. Wie in Figur 1 gezeigt, umfassen die Regalböden 110 eine Holzplatte, um eine durchgehende Fläche zur Lagerung der Waren bereitzustellen. Ferner umfasst jede der Säulen 50 einen ersten Abschnitt 52a und einen zweiten Abschnitt 52b, die sich vertikal entlang der Haupterstreckungsrichtung jeder der Säulen 50 erstrecken, wobei der erste und der zweite Abschnitt 52a, 52b einen Winkel von etwa 90° zueinander bilden, so dass eine Ecke der rechteckigen Regalböden 110 sowohl den ersten als auch den zweiten Abschnitt 52, 52b kontaktiert. Außerdem umfassen sowohl der erste Abschnitt 52a als auch der zweite Abschnitt 52b eine Mehrzahl von Öffnungen 54.

Für die Montage des Steckregals 100 werden die vier Säulen 50 vertikal angeordnet und anschließend die Regalböden 110 mit jeder der Säulen 50 verbunden. Die Verbindung zwischen einem Regalboden 110 und einer Säule 50 erfolgt durch manuelles Einführen von an den Ecken eines Regalbodens 110 angeordneten Vorsprüngen oder Nietköpfen in einen ersten Aufnahmeabschnitt einer entsprechenden Öffnung 54 des ersten Abschnitts 52a bzw. des zweiten Abschnitts 52b der Säule 50. Durch Verschieben der Vorsprünge oder Nietköpfe aus dem ersten Aufnahmeabschnitt jeder Öffnung 54 in einen zweiten, engeren Aufnahmeabschnitt der entsprechenden Öffnung 54 wird der Regalboden 110 in Eingriff mit der Säule 50 gebracht.

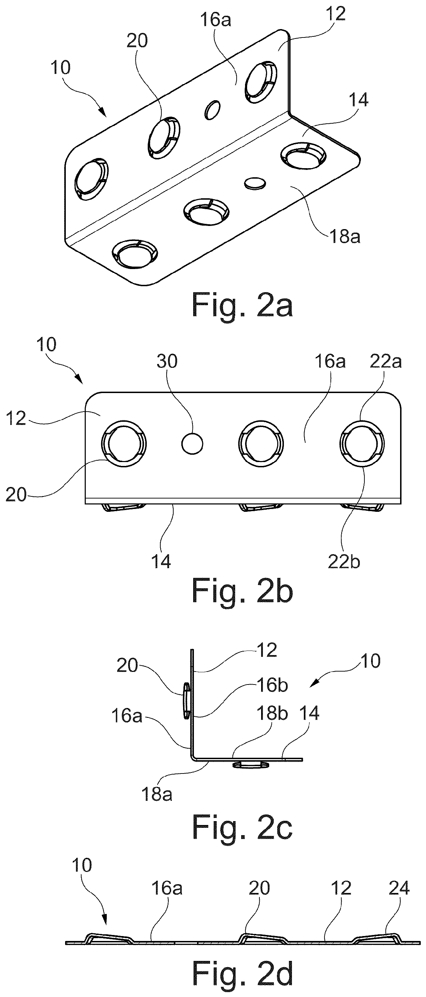

Die Figuren 2a bis 2d veranschaulichen verschiedene Ansichten eines ersten Ausführungsbeispiels einer Steckregal-Verbindungseinheit 10 gemäß der vorliegenden Erfindung. Die Steckregal-Verbindungseinheit 10 kann insbesondere dazu verwendet werden, die Höhe des in Figur 1 gezeigten Steckregals 100 durch Verbinden zweier einzelner Säulensegmente 50 zu vergrößern. Dazu umfasst die Steckregal-Verbindungseinheit 10 einen ersten länglichen Abschnitt 12 und einen zweiten länglichen Abschnitt 14. Beide länglichen Abschnitte 12, 14 erstrecken sich parallel entlang einer Haupterstreckungsrichtung X-X der Steckregal-Verbindungseinheit 10. Ferner umfasst jeder längliche Abschnitt 12, 14 eine erste Fläche 16a, 18a, wie in der perspektivischen Ansicht der Figuren 2a und 2c gezeigt. Entgegengesetzt zu der ersten Fläche 16a, 18a ist eine zweite Fläche 16b, 18b auf jedem aus dem ersten und zweiten länglichen Abschnitt 12, 14 angeordnet.

Auf der ersten Fläche 16a des ersten länglichen Abschnitts 12 und auf der ersten Fläche 18a des zweiten länglichen Abschnitts 14 sind jeweils insgesamt drei Verbindungselemente 20 angeordnet. Die Verbindungselemente 20 sind so gebildet, dass sie jeweils von den ersten Flächen 16a, 18a des ersten und des zweiten länglichen Abschnitts 12, 14 hervorstehen. Ferner ist zwischen zwei benachbarten Verbindungselementen 20 ein Loch 30 bereitgestellt, das dazu verwendet werden kann, zusätzliche Befestigungsmittel (nicht gezeigt) an der Steckregal-Verbindungseinheit 10 zu befestigen bzw. auszubilden. Wie in Figur 2c am besten zu erkennen ist, sind der erste längliche Abschnitt 12 und der zweite längliche Abschnitt 14 in einem Winkel von 90° relativ zur Haupterstreckungsrichtung X-X der Steckregal-Verbindungseinheit 10 angeordnet. Dieser Winkel entspricht dem Winkel zwischen dem ersten Abschnitt 52a und dem zweiten Abschnitt 52b des in Figur 1 gezeigten Säulensegments 50, so dass die Steckregal-Verbindungseinheit 10 bündig mit dem Säulensegment 50 angeordnet sein kann.

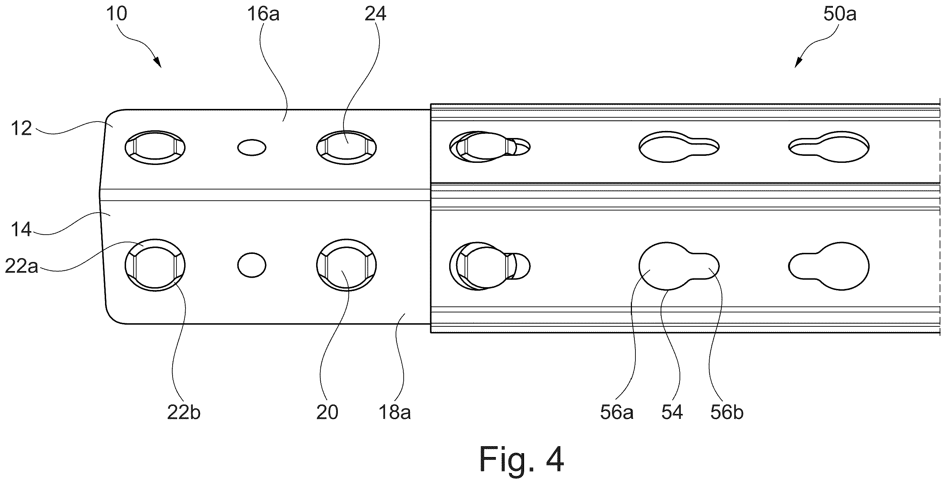

Die Verbindungselemente 20 sind so eingerichtet, dass sie in einen entsprechenden ersten Aufnahmeabschnitt 56a einer Öffnung 54 des Säulensegments 50a eingeführt werden, wie in Figur 4 gezeigt. Nach dem Einführen in den ersten Aufnahmeabschnitt 56a kann das Verbindungselement 20 in einen zweiten Aufnahmeabschnitt 56b der Öffnung 54 geschoben werden, um einen Eingriff mit dem Säulensegment 50a zu bilden. Zur Erleichterung des Eingriffs zwischen dem Verbindungselement 20 und der Öffnung 54 des Säulensegments umfasst das Verbindungselement 20 eine erste Aussparung 22a und eine zweite Aussparung 22b, die z. B. in den Figuren 2b und 4 zu sehen sind. In dem eingegriffenen Zustand der Figur 4 wird der verengte zweite Aufnahmeabschnitt 56b der Öffnung 54 zwischen den ersten Flächen 16a, 18a des ersten und zweiten länglichen Abschnitts 12, 14 und einer hervorstehenden oberen Fläche 24 des Verbindungselements 20 eingeklemmt, wodurch ein stabiler Eingriff zwischen der Steckregal-Verbindungseinheit 10 und dem Säulensegment 50a erzeugt wird.

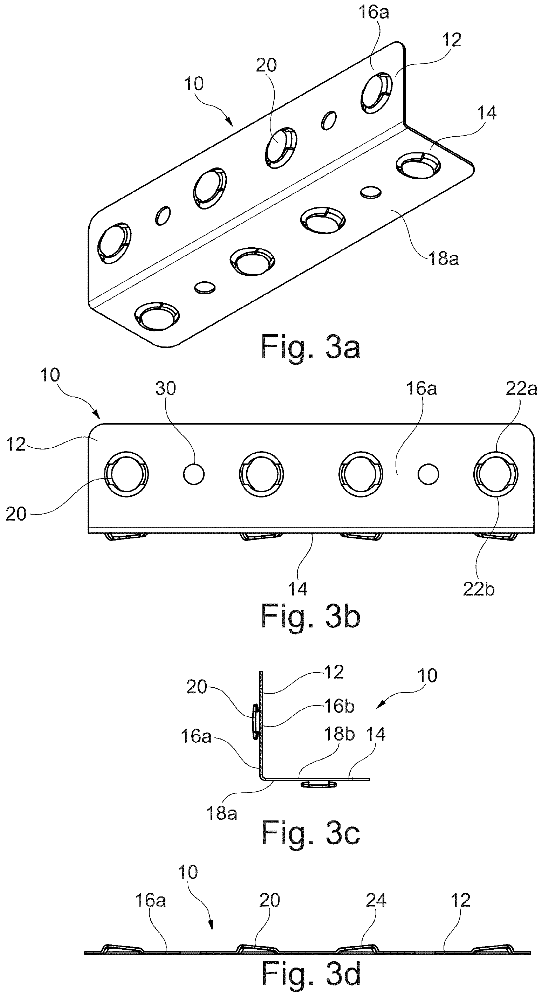

Die Figuren 3a bis 3d zeigen ein zweites Ausführungsbeispiel einer Steckregal-Verbindungseinheit 10 gemäß der vorliegenden Erfindung. Die Steckregal-Verbindungseinheit 10 des zweiten Ausführungsbeispiels unterscheidet sich von der Steckregal-Verbindungseinheit 10 des ersten Ausführungsbeispiels lediglich dadurch, dass jeder der ersten und zweiten länglichen Abschnitte 12, 14 mit insgesamt vier Verbindungselementen 20 anstelle von drei Verbindungselementen 20 bereitgestellt ist und dass an jedem länglichen Abschnitt 12, 14 zwei Löcher 30 anstelle eines Lochs 30 angeordnet sind. In Bezug auf alle weiteren Merkmale, die dem ersten und dem zweiten Ausführungsbeispiel gemeinsam sind, wird auf das erste Ausführungsbeispiel verwiesen.

Die Verwendung der Steckregal-Verbindungseinheit 10 des zweiten Ausführungsbeispiels kann bevorzugt sein, wenn die Verbindung zwischen der Steckregal-Verbindungseinheit 10 und einem ersten Säulensegment 50, z. B. dem in Figur 4 gezeigten ersten Säulensegment 50a, verstärkt werden soll.

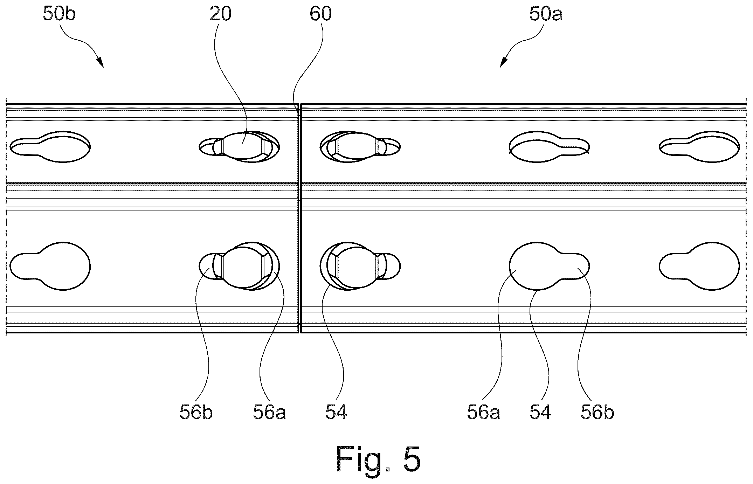

Schließlich können unter Bezugnahme auf Figur 5 zwei Säulensegmente 50a, 50b unter Verwendung der Steckregal-Verbindungseinheit 10 verbunden werden, um die Höhe einer in Figur 1 gezeigten Säule 50 zu verlängern. Dazu wird ein zweites Säulensegment 50b mit den freien Verbindungselementen 20 der Steckregal-Verbindungseinheit 10 verbunden. Die Verbindung zwischen dem zweiten Säulensegment 50b und den freien Verbindungselementen 20 wird wie zuvor unter in Bezug auf Figur 4 beschrieben hergestellt. Zusätzlich kann das zweite Säulensegment 50b um 180° gedreht werden, so dass der erste Aufnahmeabschnitt 56a und der zweite Aufnahmeabschnitt 56b der Öffnungen 54 des zweiten Säulensegments 50b in Bezug auf den ersten Aufnahmeabschnitt 56a und den zweiten Aufnahmeabschnitt 56b der Öffnungen 54 des ersten Säulensegments 50a invers angeordnet sind, bevor die freien Verbindungselemente 20 mit dem zweiten Säulensegment 50b verbunden werden. Dies wird durchgeführt, um die Breite eines Spalts 60 zwischen dem ersten und dem zweiten Säulensegment 50a, 50b entlang ihrer Haupterstreckungsrichtungen zu verringern.

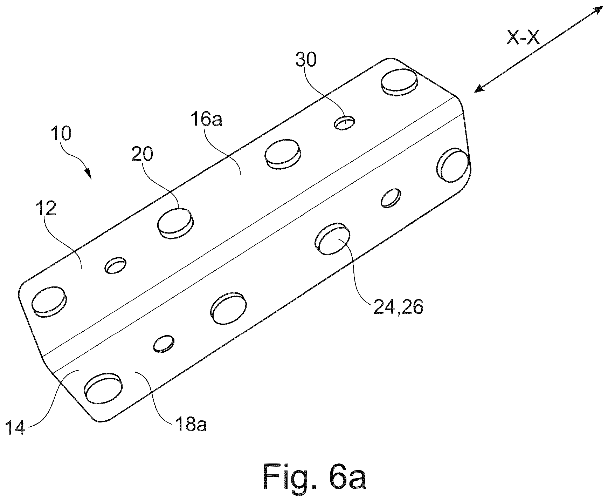

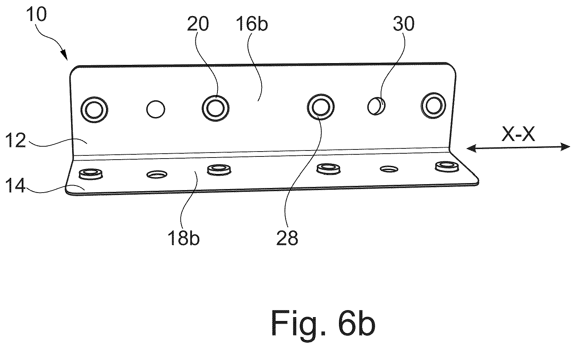

In den Figuren 6a und 6b ist nun ein drittes Ausführungsbeispiel einer Steckregal-Verbindungseinheit 10 gemäß der vorliegenden Erfindung dargestellt. Die Steckregal-Verbindungseinheit 10 des dritten Ausführungsbeispiels unterscheidet sich von dem ersten und zweiten Ausführungsbeispiel insbesondere im Hinblick auf die Ausbildung des Verbindungselements 20 an dem ersten länglichen Abschnitt 12 und dem zweiten länglichen Abschnitt 14. In Bezug auf alle weiteren Merkmale, die dem ersten, zweiten und dritten Ausführungsbeispiel gemeinsam sind, wird auf das erste bzw. das zweite Ausführungsbeispiel verwiesen.

In dem dritten Ausführungsbeispiel ist das Verbindungselement 20 nicht einstückig mit der restlichen Steckregal-Verbindungseinheit 10 ausgebildet, sondern wird über eine Nietverbindung an dem ersten bzw. dem zweiten länglichen Abschnitt 12, 14 befestigt. Dazu wird das Verbindungselement 20 in eines der Löcher 30 eingeführt und vernietet. Hierbei wird auf der zweiten Fläche 16b, 18b des ersten bzw. zweiten länglichen Abschnitts 12, 14 ein in Figur 6b gezeigter Nietfuß 28 gebildet, der das Verbindungselement 20 an einem jeweiligen länglichen Abschnitt 12, 14 fixiert.

Ferner unterscheidet sich das Verbindungselement 20 des dritten Ausführungsbeispiels von dem ersten und zweiten Ausführungsbeispiel durch die Ausbildung eines Kopfabschnitts 26, der die in diesem Fall flache obere Fläche 24 umfasst. Die obere Fläche 24 erstreckt sich hier parallel zu dem jeweiligen länglichen Abschnitt 12, 14, an dem das Verbindungselement 20 angeordnet ist.

Der Eingriff des Verbindungselements 20 des dritten Ausführungsbeispiels mit einem Säulensegment 50 eines Steckregals erfolgt analog zur für das erste und zweite Ausführungsbeispiel beschriebenen Weise, wobei in diesem Fall der Kopfabschnitt 26 in den ersten Aufnahmeabschnitt 56a einer Öffnung 54 eines Säulensegments 50, 50a, 50b eingeführt wird und anschließend in der in den Figuren 4 und 5 dargestellten Weise in den zweiten Aufnahmeabschnitt 56b verlagert wird.

## Patentansprüche

1. Steckregal-Verbindungseinheit (10) zum Verbinden einzelner Säulensegmente (50; 50a, 50b) eines Steckregals (100), wobei die Steckregal-Verbindungseinheit (10) einen ersten länglichen Abschnitt (12) und einen zweiten länglichen Abschnitt (14) umfasst, wobei sich der erste längliche Abschnitt (12) und der zweite längliche Abschnitt (14) parallel entlang einer Haupterstreckungsrichtung (X-X) der Steckregal-Verbindungseinheit (10) erstrecken,
wobei jeder längliche Abschnitt (12, 14) eine erste Fläche (16a, 18a) und eine zweite Fläche (16b, 18b) entgegengesetzt zu der ersten Fläche (16a, 18a) umfasst,
wobei wenigstens ein Verbindungselement (20) an der ersten Fläche (16a) des ersten länglichen Abschnitts (12) und/oder an der ersten Fläche (18a) des zweiten länglichen Abschnitts (14) bereitgestellt ist, und
wobei das Verbindungselement (20) so ausgebildet ist, dass es von der ersten Fläche (16a, 18a) hervorsteht und dazu eingerichtet ist, in einen entsprechenden ersten Aufnahmeabschnitt (56a) einer Öffnung (54) eines Säulensegments (50) eines Steckregals (100) eingeführt zu werden und, nachdem es in den ersten Aufnahmeabschnitt (56a) eingeführt worden ist, in einen zweiten Aufnahmeabschnitt (56b) der Öffnung (54) verlagert zu werden, um einen Eingriff mit dem Säulensegment (50) zu bilden.

2. Steckregal-Verbindungseinheit (10) gemäß Anspruch 1, wobei sowohl der erste längliche Abschnitt (12) als auch der zweite längliche Abschnitt (14) wenigstens ein Verbindungselement (20) umfassen, und wobei die Anzahl der Verbindungselemente (20), die auf der ersten Fläche des ersten länglichen Abschnitts (12) und des zweiten länglichen Abschnitts (14) gebildet sind, identisch ist.

3. Steckregal-Verbindungseinheit (10) gemäß Anspruch 1 oder 2, wobei die Anordnung der an dem ersten länglichen Abschnitt (12) und an dem zweiten länglichen Abschnitt (14) gebildeten Verbindungselemente (20) identisch ist.

4. Steckregal-Verbindungseinheit (10) gemäß einem der vorhergehenden Ansprüche, wobei das Verbindungselement (20) einstückig mit dem ersten länglichen Abschnitt (12) oder dem zweiten länglichen Abschnitt (14) gebildet ist.

5. Steckregal-Verbindungseinheit (10) gemäß einem der Ansprüche 1 bis 3, wobei das Verbindungselement (20) über eine Nietverbindung an dem ersten länglichen Abschnitt (12) oder dem zweiten länglichen Abschnitt (14) befestigt ist.

6. Steckregal-Verbindungseinheit (10) gemäß einem der vorhergehenden Ansprüche, wobei das Verbindungselement (20) eine erste Aussparung (22a) und eine zweite Aussparung (22b) umfasst, wobei die zweite Aussparung (22b) in Bezug auf das Verbindungselement (20) der ersten Aussparung (22a) gegenüberliegt, und wobei die erste Aussparung (22a) und die zweite Aussparung (22b) jeweils so eingerichtet sind, dass sie zumindest teilweise in den zweiten Aufnahmeabschnitt (56b) der Öffnung (54) eines Säulensegments (50) eines Steckregals (100) eingreifen.

7. Steckregal-Verbindungseinheit (10) gemäß einem der vorhergehenden Ansprüche, wobei der erste längliche Abschnitt (12) und der zweite längliche Abschnitt (14) in einem Winkel von 30° bis 150°, vorzugsweise von 60° bis 120°, noch bevorzugter von 90°, relativ zur Haupterstreckungsrichtung (X-X) der Steckregal-Verbindungseinheit (10) angeordnet sind.

8. Steckregal-Verbindungseinheit (10) gemäß einem der vorhergehenden Ansprüche, wobei der erste längliche Abschnitt (12) und der zweite längliche Abschnitt (14) jeweils drei Verbindungselemente (20) umfassen, und
wobei der erste längliche Abschnitt (12) und der zweite längliche Abschnitt (14) vorzugsweise jeweils eine Länge von 90 bis 100 mm und eine Breite von 30 bis 40 mm aufweisen.

9. Steckregal-Verbindungseinheit (10) gemäß einem der vorhergehenden Ansprüche, wobei der erste längliche Abschnitt (12) und der zweite längliche Abschnitt (14) jeweils vier Verbindungselemente (20) umfassen, und
wobei der erste längliche Abschnitt (12) und der zweite längliche Abschnitt (14) vorzugsweise jeweils eine Länge von 130 bis 140 mm und eine Breite von 30 bis 40 mm aufweisen.

10. Steckregal-Verbindungseinheit (10) gemäß einem der vorhergehenden Ansprüche, wobei ein Abstand zwischen einem Mittelpunkt zweier benachbarter Verbindungselemente (20) jedes der ersten und zweiten länglichen Abschnitte (12, 14) zwischen 20 und 50 mm, vorzugsweise zwischen etwa 30 und 40 mm beträgt.

11. Steckregal-Verbindungseinheit (10) gemäß einem der vorhergehenden Ansprüche, wobei der erste längliche Abschnitt (12) und/oder der zweite längliche Abschnitt (14) wenigstens ein Loch (30) umfasst.

12. Steckregal-Verbindungseinheit (10) gemäß einem der vorhergehenden Ansprüche, wobei eine obere Fläche (24) des Verbindungselements (20) relativ zu der ersten Fläche (16a, 18a) des ersten länglichen Abschnitts (12) oder des zweiten länglichen Abschnitts (14) geneigt ist.

13. Steckregal-Verbindungseinheit (10) gemäß einem der Ansprüche 1 bis 11, wobei sich eine obere Fläche (24) des Verbindungselements (20) parallel zu der ersten Fläche (16a, 18a) des ersten länglichen Abschnitts (12) oder des zweiten länglichen Abschnitts (14) erstreckt.

14. Steckregal (100), umfassend:
eine Mehrzahl von Säulensegmenten (50);
wenigstens eine Steckregal-Verbindungseinheit (10) gemäß einem der Ansprüche 1 bis 13, wobei die Steckregal-Verbindungseinheit (10) zwei Säulensegmente (50) miteinander verbindet; und
wenigstens einen Regalboden (110), der zum Lagern von Waren eingerichtet ist.

15. Steckregal gemäß Anspruch 14, wobei der wenigstens eine Regalboden (110) wenigstens teilweise Holz vom Typ OSB umfasst.
